# EUROPÄISCHE PATENTSCHRIFT

(11) **EP 0 999 384 B1**
(45) Veröffentlichungstag und Bekanntmachung des Hinweises auf die Patenterteilung: **10.04.2002**
(21) Anmeldenummer: 98120894.5
(22) Anmeldetag: 04.11.1998
(51) Int. Cl.: F16H 61/24, F16H 63/38

(54) **Schaltvorrichtung für Wechselgetriebe von Kraftfahrzeugen**
Shift mechanism for change-speed gearing in motor vehicles
Dispositif de changement de vitesse pour une boîte de vitesse d'un véhicule automobile

(43) Veröffentlichungstag der Anmeldung: 10.05.2000
(73) Patentinhaber: Ford Global Technologies, Inc., A subsidiary of Ford Motor Company, Dearborn, Michigan 48126 (US)
(72) Erfinder: Bernhardt, Udo, 50259 Pulheim (DE); Doelling, Matthias, 51429 Bergisch Gladbach (DE); Chazotte, Jean-Pierre, 50678 Köln (DE); Deidewig, Hartmut, 51503 Roesrath (DE)
(74) Vertreter: Messulam, Alec Moses

(56) Entgegenhaltungen:
- EP-A- 0 756 112
- DE-C- 4 443 523
- DE-C- 19 733 206
- PATENT ABSTRACTS OF JAPAN vol. 095, no. 004, 31. Mai 1995 & JP 07 012219 A (FUJI KIKO CO LTD), 17. Januar 1995
- PATENT ABSTRACTS OF JAPAN vol. 097, no. 003, 31. März 1997 & JP 08 296735 A (FUJI KIKO CO LTD), 12. November 1996

## Beschreibung

Die Erfindung bezieht sich auf eine Schaltvorrichtung für Wechselgetriebe von Kraftfahrzeugen, der im Oberbegriff des Patentanspruches 1 aufgezeigten Art.

Aus der EP 0 394 556 B1 ist eine Schaltvorrichtung für Wechselgetriebe von Kraftfahrzeugen der im Oberbegriff des Patentanspruches erläuterten Art bekannt.

Die bekannte Schaltvorrichtung weist den Nachteil auf, daß bei dieser eine senkrecht angeordnete Schaltwelle aufweisenden Schaltvorrichtung, bei der die Schaltwelle zum Vorwählen von Schaltgassen vertikal verschiebbar ist und zum Einrücken der Gänge um ihre Achse drehbar ist, eine an der Schaltwelle angreifende Doppelfederanordnung erforderlich ist, die dafür sorgt, daß die Schaltwelle stets wieder in ihre Neutral- oder Ausgangs-Schaltgasse zurückgeführt wird.

Bei der den Ausgangspunkt der Erfindung bildenden Schrift zum Stand der Technik, der EP 0 394 556 B1 ist diese Doppelfederanordnung in einem Abschnitt eines äußeren Schaltungsdeckels angeordnet.

Aus der DE 44 43 523 C1 ist eine weitere ähnliche Schaltvorrichtung für Wechselgetriebe von Kraftfahrzeugen bekannt, die gleichfalls eine vertikal angeordnete Schaltwelle umfaßt, die zur Vorwahl von Schaltgassen vertikal verschiebbar ist und zum Einrücken der Gänge radial verschwenkbar ist und auch hier ist eine Doppelfederanordnung vorgesehen, um die vertikale Schaltwelle in ihrer Neutral-Ausgangs-Schaltgasse zu halten, wobei jedoch hier die beiden Schraubenfedern getrennt in einem oberen und einem unteren Bereich der Schaltvorrichtung angeordnet sind.

Bei der ersten bekannten Schaltvorrichtung ist hierbei eine federbelastete Kugetraste vorgesehen, die mit einem mit dem Schaltfinger verbundenen Rastnockenkamm zusammenwirkt, um die Positionen der Gangstufen festzulegen.

Bei der zweiten bekannten Schaltvorrichtung sind sogar zwei federbelastete Kugelrasten vorgesehen, von denen die eine die Positionen der Schaltgassen festlegt, während die andere die Positionen der Gangstufen bestimmt.

Die Aufgabe der Erfindung st es, eine Schaltvorrichtung für Wechselgetriebe von Kraftfahrzeugen der im Oberbegriff des Patentanspruches erläuterten Art derart zu verbessern, daß mit geringerem technischem Aufwand eine zuverlässige und saubere Positionierung der Schaltwelle in ihren Schaltgassen und in ihren Gangstufen ermöglicht wird.

Gemäß der Erfindung wird d ese Aufgabe gelöst, indem bei einer Schaltvorrichtung für Wechselgetriebe von Kraftfahrzeugen, der im Oberbegriff des Patentanspruches 1 erläuterten Art, die im Kennzeichenteil des Patentanspruches 1 aufgezeigten Merkmale angewendet werden.

Dadurch, daß die federbela stete Kugelraste an der den Schaltfinger und den Schaltstift aufnehmenden Sonaltfingernabe auf der Schaltwelle angeordnet ist und deren Kugel mit einer am inneren Schaltgehäuse der Kugelraste gegenüberliegend angeordneten Konturenplatte zusammenwirkt, wobei die Konturenplatte einen oberen und einen unteren, zueinander flach V-förmig angeordnete Flächenabschnitte aufweist, deren Scheitel die Neutral- oder Ausgangs-Schaltgasse der Schaltwelle festlegt und an den vertikalen Seitenrändern der Flächenabschnitte Rastnuten zur Bereitstellung der Positionen der Gangstufen vorgesehen sind, wird durch eine entsprechende Neigung der zueinander V-förmig angeordneten Flächenabschnitte dafür gesorgt, daß die federbelastete Kugelraste die Schaltwelle in ihrer Ausgangs- oder Neutralschaltgasse halten kann, obwohl das Gewicht der Schaltwelle mit den auf ihr angeordneten Bauteile diese nach unten zu drängen sucht.

Durch die erfindungsgemäß angeordnete Kugelraste in Verbindung mit der besondere Flächenabschnitte aufweisenden Konturenplatte wird eine Schaltvorrichtung für Wechselgetriebe von Kraftfahrzeugen geschaffen, deren Aufbau durch den Wegfall der früher erforderlichen Doppelfederanordnungen und Doppelkugelrastenanordnungen einfacher und platzsparender ist und der durch weitere besondere Ausgestaltungen der Konturenplatte in erwünschter Weise ein sogenanntes Cross-Schalten, wie es auch durch die abgerundeten Bereiche der Schaltkulisse zugelassen wird, ermöglicht.

Weitere Einzelheiten der Erfindung werden in den Ansprüchen 1 bis 3 näher erläutert.

Die Erfindung wird anhand eines in den beiliegenden Zeichnungen gezeigten Ausführungsbeispieles näher erläutert. Es zeigt:
- Fig. 1: eine Schrägrißansicht der Schaltvorrichtung für Wechselgetriebe von Kraftfahrzeugen, in der die erfindungsgemäße Konturenplatte von außen sichtbar ist;
- Fig. 2: eine Schrägrißansicht der Schaltvorrichtung nach Fig. 1, in der die erfindungsgemäße Kugelraste und die mit ihr zusammenwirkende Konturenplatte von innen sichtbar ist;
- Fig. 3: eine Schrägrißansicht nur der wesentlichen Teile der erfindungsgemäßen Schaltvorrichtung und

- Fig. 5 und 6: zeigen Schrägrißinnen- bzw. Außenansichten der erfindungsgemäßen Konturenplatte.

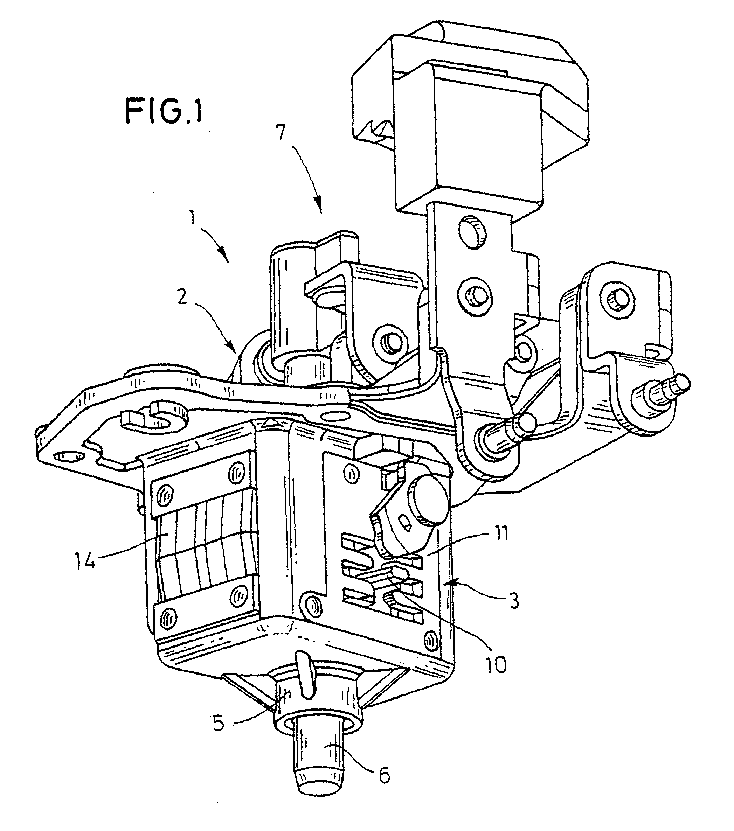

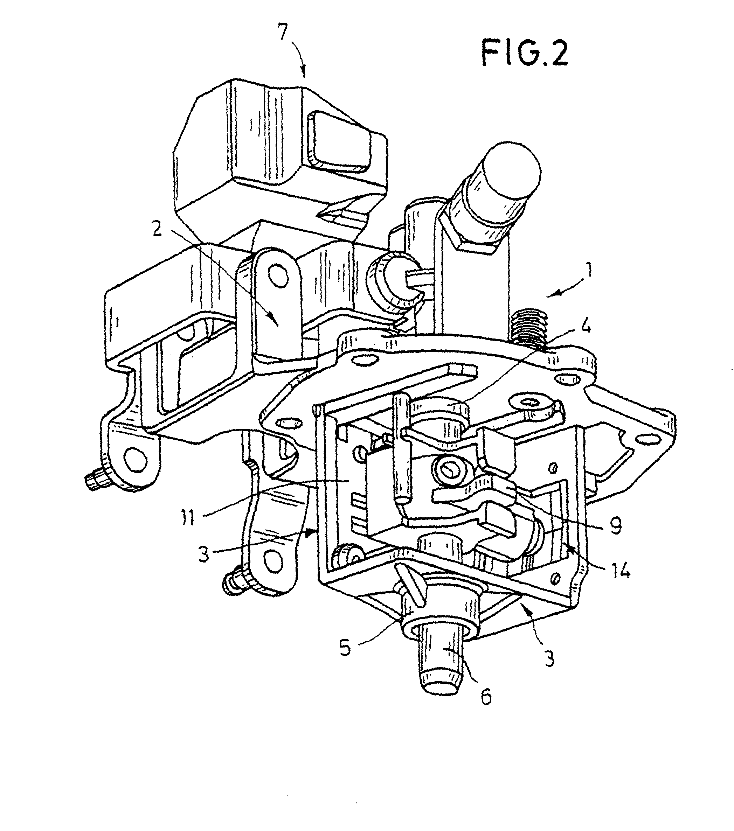

Bei der aus den Figuren 1 und 2 ersichtlichen Schaltvorrichtung für Wechselgetriebe von Kraftfahrzeugen besteht eine Schaltvorrichtung 1 im wesentlichen aus einem äußeren Schaltgehäuse 2 und einem inneren Schaltgehäuse 3, die miteinander fest verbunden sind, wobei z.B. das äußere Schaltgehäuse 2 einen Befestigungsflansch und eine obere Lagerung 4 für die Schaltwelle bildet. Der Befestigungsflansch dient zum Verbinden mit einem Getriebegehäuse (nicht gezeigt).

In einer oberen und einer unteren Lagerung 4 bzw. 5, deren Aufbau nicht näher erläutert zu werden braucht, ist eine Schaltwelle 6 vertikal verschiebbar und radial verschwenkbar angeordnet. Die beiden Bewegungskomponenten der Schaltwelle 6 werden über eine am äußeren Schaltgehäuse 2 angeordnete Hebelanordnung 7 bewerkstelligt, deren Details hier im einzelnen nicht näher erläutert werden, da sie nicht Gegenstand der vorliegenden Erfindung sondern einer früheren Anmeldung der Anmelderin ist.

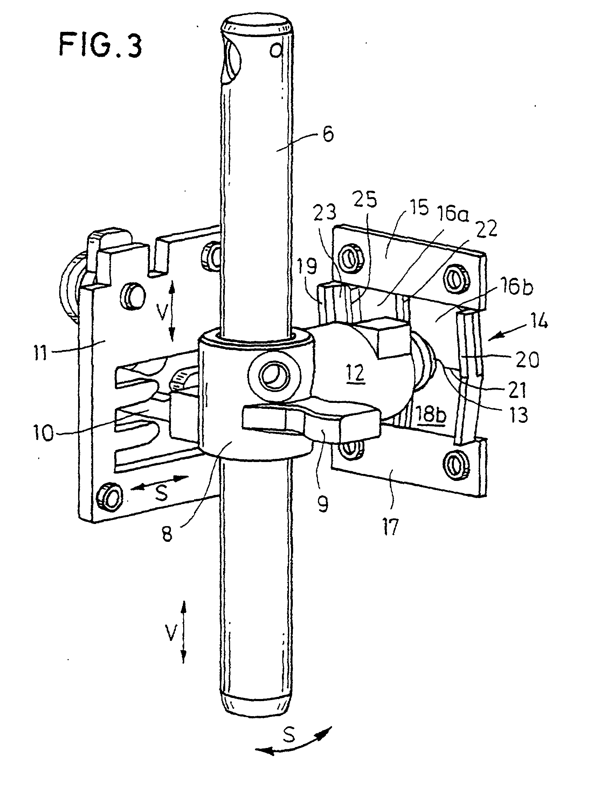

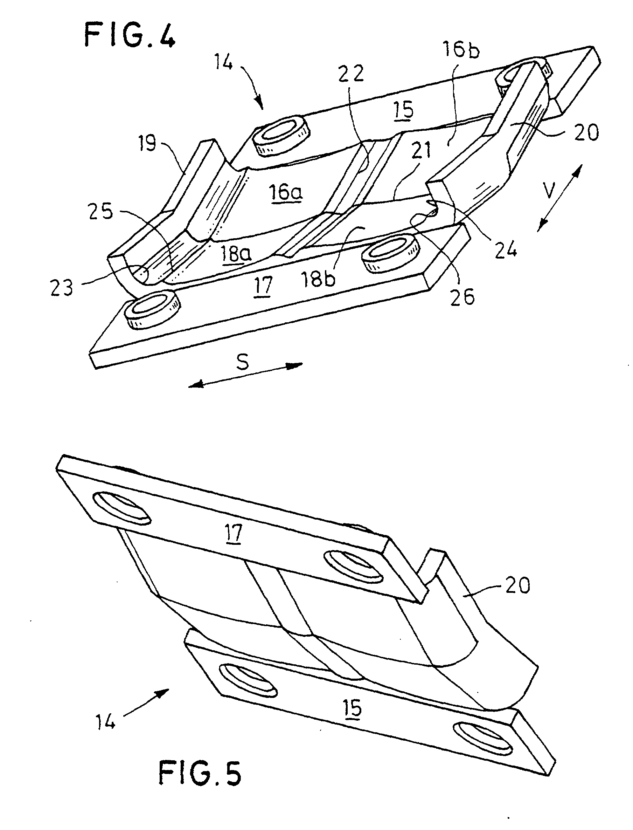

Die Erfindung wird nunmehr im Zusammenhang mit den Fig. 3 bis 6 näher erläutert, in denen zur klareren Erläuterung der Erfindung nur die wesentlichen Bauteile der Schaltvorrichtung gezeigt sind und beschrieben werden.

An der vertikal verschiebbaren und radial verschwenkbaren Schaltwelle 6 ist eine Schaltfingernabe 8 angeordnet, an der in bereits bekannter Weise ein Schaltfinger 9 und ein Schaltstift 10 ausgebildet sind.

Der Schaltfinger 9 wirkt in an sich bekannter Weise mit sogenannten Schaltarmen von Schaltgabeln (nicht gezeigt) zusammen, um je nach ausgewählter Schaltgabel eine entsprechende Gangstufe einzulegen. Der Schaltstift 10 wirkt mit einer inneren Schaltkulisse 11 zusammen, die am inneren Schaltgehäuse 3 befestigt ist und in an sich bekannter Weise die entsprechenden Konturen für die verschiedenen Schaltgasse mit entsprechenden Abrundungen für ein sogenanntes Cross-Schalten aufweist.

Das Wesentliche der vorliegenden Erfindung ist die unmittelbar an der Schaltfingernabe 8 angeordnete federbelastete Kugelraste, deren Gehäuse mit 12 und deren Kugel mit 13 bezeichnet ist. Der Aufbau der federbelasteten Kugelraste 12/13 entspricht dem üblichen Aufbau eines solchen Bauelementes und wird daher hier im einzelnen nicht näher erläutert.

Der federbelasteten Kugelraste 12 bzw. deren Kugel 13 gegenüberliegend ist eine Konturenplatte 14 angeordnet, die am inneren Schaltgehäuse 3 in geeigneter Weise befestigt werden kann.

Die Konturenplatte 14 weist einen oberen Befestigungsabschnitt 15 auf, an den sich obere Flächenabschnitte 16 a und 16 b anschließen sowie einen unteren Befestigungsabschnitt 17 an den sich untere Flächenabschnitte 18 a und 18 b anschließen. Die Konturenplatte 14 weist weiterhin vertikal verlaufende seitliche Abkantungen 19 und 20 auf.

Es wird darauf hingewiesen, daß die oberen und unteren Flächenabschnitte 16 und 18 zueinander flach V-förmig angeordnet sind und eine Scheitellinie 21 bilden, deren Lage die Ausgangs- oder Neutral-Schaltgasse der Schaltwelle 6 bestimmt, indem die Kraft der federbelasteten Kugelraste 12 in Verbindung mit der Neigung der Raupe so ausgelegt wird, daß deren Kugel 13 stets diese Lage einzunehmen sucht und damit die Schaltwelle mitsamt dem Gewicht der mit der Schaltwelle 6 verbundenen Bauteile in der Ausgangs- oder Neutralschaltgasse hält.

Im Mittelbereich der Konturenplatte 14 ist eine vertikale Nut 22 vorgesehen, die die Vorwahlebene der Schaltvorrichtung bestimmt. Darüber hinaus sind benachbart den seitlichen Abkantungen 19 und 20 vertikal verlaufende Bereiche 23 und 24 mit definierten Radien vorgesehen, in die die Kugel 13 der federbelasteten Kugelraste 12 nach Überwinden von kaum merkbaren parallel laufenden Wülsten 25 und 26 einfallen kann, um das erwünschte Schaltgefühl beim Erreichen der Einrückung der Gangstufe bereitzustellen.

Es wird darauf hingewiesen, daß die Neigung der oberen und unteren Flächenabschnitte 16 a und b sowie 18 a und b gegenüber einer Vertikalen entsprechend unterschiedlich ausgebildet sind, um bei den verschiedentlichen möglichen Bewegungen der Kugel 13 der Kugelraste 12 das jeweils gewünschte Schaltgefühl für den Fahrer des Kraftfahrzeuges bereitzustellen. Dementsprechend können die links und rechts der vertikalen Nut 22 für die Vorwahlebene liegenden Flächenbereiche der Flächenabschnitte 16 und 18 unterschiedlich konturiert sein.

Aus einer Betrachtung der Fig. 3 bis 5 ist leicht ersichtlich, daß durch die erfindungsgemäße Kombination einer federbelasteten Kugelraste 12/13 unmittelbar an der Schaltwelle 6 in Verbindung mit einer ihr gegenüberliegenden Konturenplatte 14 eine Schaltvorrichtung geschaffen wird, bei der sowohl die erforderlichen Rückführbewegungen in die Ausgangs- bzw. Neutral-Schaltgasse als auch die erwünschten Rastpositionen beim Erreichen der Gangstufen mit einem einfachen platzsparenden Bauteil erzielt werden können.

Die erfindungsgemäße Konturenplatte kann hierbei in kostengünstiger Weise als ein Feinprägeteil ausgebildet werden, wobei in einem Arbeitsgang die unterschiedlichsten gewünschten Konturenverläufe innerhalb der Flächenabschnitte 16 a/16 b und 18 a/18 b der Konturenplatte realisiert werden können.

Nur der Vollständigkeit halber sei darauf hingewiesen, daß aus den beiden Druckschriften DE 31 16 833 C1 und DE 41 09 94. A1 bereits Schaltwellen mit an dieser angeordneten federbelasteten Kugelrasten, die mit einer gegenüberliegenden Konturenplatten zusammenwirken, bekannt sind, bei diesen Schaltwellen handelt es sich jedoch um waagerecht angeordnete Schaltwellen, deren Rückführung in eine entsprechende Ausgangs- oder Neutral-Schaltgasse nicht in erheblichem Maße vom Gewicht der Schaltwellenanordnung beeinträchtigt wird.

## Patentansprüche

1. Schaltvorrichtung für Wechselgetriebe von Kraftfahrzeugen, mit einem in sei ner Lage gegenüber einem Getriebegehäuse fixierten äußeren Schaltgehäuse (2) und einem mit diesem fest verbundenen inneren Schaltgehäuse (3), in denen über eine obere und untere Lagerung (4 und 5) eine in ihrer Achsrichtung vertikal verschiebbare und um ihre Achse drehbare Schaltwelle (6) aufgenommen ist, an der ein mit den Schaltarmen von Schaltgabeln zusammenwirkender Schaltfinger (9) und ein mit einer Schaltkulisse (11) zusammenwirkender Schaltstift (10) angeordnet ist, wobei an der Schaltvorrichtung zumindest eine, die Positionen der Gangstufen festlegende federbelastete Kugelraste angeordnet ist,
**dadurch gekennzeichnet, daß**
- die federbelastete Kugelraste (12/13) an der den Schaltfinger (9) und den Schaltstift (10) aufnehmenden Schaltfingernabe (8) auf der Schaltwelle (6) angeordnet ist, deren Kugel (13) mit einer am inneren Schaltgehäuse (3) der Kugelraste (12/13) gegenüberliegend angeordneten Konturenplatte (14) zusammenwirkt, wobei
- die Konturenplatte (14) einen oberen und einen unteren Flächenabschnitt (16 a/16 b und 18 a/18 b) aufweist, die zueinander flach V-förmig angeordnet sind und deren Scheitel (21) die Neutral- oder Ausgangs-Schaltgasse der Schaltwelle (6) festlegt und deren Kontur den Verlauf der Einzugskraft beeinflußt,
- die Konturenplatte (14) eine vertikale Nut (22) und vertikale seitliche Bereiche (23/24) aufweist, die die Vorwahlebene bestimmen bzw. die Einrückpositionen der Gangstufen festlegen.

2. Schaltvorrichtung für Wechselgetriebe von Kraftfahrzeugen nach Anspruch 1,
**dadurch gekennzeichnet, daß**
- an der Konturenplatte (14) obere und untere Befestigungsabschnitte (15 und 17) vorgesehen sind, wobei die oberen Flächenabschnitte (16 a/16 b) und die unteren Flächenabschnitte (18 a/18 b) unterschiedliche Neigungswinkel in Hinblick auf eine Vertikale aufweisen sowie jeweils unterschiedliche Konturen aufweisen können.

3. Schaltvorrichtung für Wechselgetriebe von Kraftfahrzeugen nach den Ansprüchen 1 und 2,
**dadurch gekennzeichnet, daß**
- die an der Konturenplatte (14) vorgesehenen seitlichen Bereiche (23 und 24) mit definierten Radien nach Überwinden kaum merkbarer parallel laufender Wülste (25 bzw. 26) zugänglich sind.

## Claims

1. Shift mechanism for change-speed gearing in motor vehicles with outer shift housing (2) fixed in its position in relation to gearbox housing and inner shift housing (3) connected securely thereto, in which via an upper and a lower bearing (4 and 5) a selector shaft (6) which can be displaced vertically in its axial direction and can be rotated about its axis is received, on which a shift finger (9) working in association with the shift arms of shift forks and a shift pin (10) working in association with a selector gate (11) are arranged, wherein on the shift mechanism at least one ball catch fixing the positions of the gear stages is arranged,
**characterised in that**
- the spring-loaded ball catch (12 / 13) is arranged on the shift finger hub (8) on the selector shaft (6) receiving the shift finger (9) and the shift pin (10), wherein the ball (13) thereof interacts with a contour plate (14) mounted on the inner shift housing (3) opposite the ball catch (12 / 13), wherein
- the contour plate (14) has an upper and a lower surface section (16a / 16b and 18a / 18b), which are arranged in a flat V shape to each other, and whose summit (21) fixes the neutral or starting shift gate of the selector shaft (6) and whose contour influences the course of the retracting force,
- the contour plate has a vertical groove (22) and vertical side areas (23 / 24), which determine the pre-selection area / fix the engagement position of the gear stages.

2. Shift mechanism for change-speed gearing of motor vehicles according to Claim 1
**characterised in that**
upper and lower securing sections (15 and 17) are provided on the contour plate (14), wherein the upper surface sections (16a / 16b) and the lower surface sections (18a / 18b) can have different angles of inclination with regard to a vertical as well as different contours.

3. Shift mechanism for change-speed gearing in motor vehicles
**characterised in that**
the side areas (23 and 24) with defined radii provided on the contour plate (14) are accessible after surmounting barely noticeable parallel running beads (25 / 26).

## Revendications

1. Dispositif de changement de vitesses pour boîtes de vitesses de véhicules automobiles, comprenant un carter extérieur de commutation (2) consigné dans sa position vis-à-vis d'un carter de transmission, et un carter intérieur de commutation (3) relié rigidement audit carter extérieur, carters dans lesquels est logé, par l'intermédiaire de portées supérieure et inférieure (4 et 5), un arbre sélecteur (6) pouvant coulisser verticalement dans sa direction axiale, pouvant tourner autour de son axe, et sur lequel sont disposés un doigt sélecteur (9) coopérant avec les bras sélecteurs de fourchettes d'embrayage, et un ergot sélecteur (10) coopérant avec une coulisse de sélection (11), au moins un loquet à bille sollicité élastiquement, établissant fermement les positions des rapports de vitesses, étant implanté sur le dispositif de changement de vitesses,
**caractérisé par le fait que**
- le loquet à bille (12/13) sollicité élastiquement est calé sur l'arbre sélecteur (6), sur le moyeu (8) recevant le doigt sélecteur (9) et l'ergot sélecteur (10), loquet dont la bille (13) coopère avec une plaque profilée (14) agencée en vis-à-vis dudit loquet à bille (12/13) sur le carter intérieur de commutation (3), sachant que
- ladite plaque profilée (14) comporte des segments superficiels supérieur et inférieur (16a/16b et 18a/18b) agencés en décrivant mutuellement un V aplati, dont le sommet (21) établit fermement le couloir de sélection neutre ou initial de l'arbre sélecteur (6), et dont le profil influence l'allure de la force d'entrée,
- la plaque profilée (14) présente une gorge verticale (22) et des zones latérales verticales (23/24) qui déterminent le plan de présélection, ou établissent fermement les positions d'enclenchement des rapports de vitesses.

2. Dispositif de changement de vitesses pour boîtes de vitesses de véhicules automobiles, selon la revendication 1,
**caractérisé par le fait que**
- des régions de fixation supérieure et inférieure (15 et 17) sont prévues sur la plaque profilée (14), les segments superficiels supérieurs (16a/16b) et les segments superficiels inférieurs (18a/18b) possédant des angles d'inclinaison différents par rapport à une verticale, et pouvant posséder des profilages respectivement différents.

3. Dispositif de changement de vitesses pour boîtes de vitesses de véhicules automobiles, selon les revendications 1 et 2,
**caractérisé par le fait que**
- les zones latérales (23 et 24) à rayons bien définis, prévues sur la plaque profilée (14), sont accessibles après avoir surmonté l'action de bourrelets (25, respectivement 26) à étendue parallèle, de réalisation discrète.
